# EUROPÄISCHE PATENTSCHRIFT

(11) **EP 2 686 549 B1**
(45) Veröffentlichungstag und Bekanntmachung des Hinweises auf die Patenterteilung: **01.04.2015**
(21) Anmeldenummer: 12707978.8
(22) Anmeldetag: 21.02.2012
(51) Int. Cl.: F03D 11/00, H02G 13/00

(54) **WINDENERGIEANLAGE MIT EINEM ROTORBLATT UND EINEM BLITZABLEITER**
WIND POWER PLANT HAVING A ROTOR BLADE AND A LIGHTNING CONDUCTOR
ÉOLIENNE DOTÉE D'UNE PALE DE ROTOR ET D'UN PARATONNERRE

(30) Priorität: 18.03.2011 DE 102011014537
(43) Veröffentlichungstag der Anmeldung: 22.01.2014
(73) Patentinhaber: Nordex Energy GmbH, 22419 Hamburg (DE)
(72) Erfinder: MAGNUS, Stefan, 22941 Delingsdorf (DE); THIEL, Enrico, 18057 Rostock (DE)
(74) Vertreter: Hauck Patentanwaltspartnerschaft mbB
(86) Internationale Anmeldenummer: PCT/EP2012/000742
(87) Internationale Veröffentlichungsnummer: WO 2012/126558

(56) Entgegenhaltungen:
- DE-C1- 19 748 716
- DE-U1- 29 722 109

## Beschreibung

Die Erfindung betrifft eine Windenergieanlage mit einem Rotor, der mindestens ein Rotorblatt mit einem Blitzableiter und einen elektrischen Verbraucher aufweist, der in dem Rotorblatt angeordnet ist.

Die Wahrscheinlichkeit eines Blitzschlags ist bei Windenergieanlagen wegen ihrer großen Höhe relativ groß. Es ist daher sinnvoll, sowohl die Gondel, den Turm als auch die Rotorblätter mit einer geeigneten Blitzschutzeinrichtung zu versehen, die eine Beschädigung der Windenergieanlage beim Einschlag eines Blitzes verhindert. Hierzu weisen die Rotorblätter einen mit Blitzrezeptoren verbundenen Blitzableiter auf, der sich üblicherweise bis in die Blattspitze erstreckt.

Aus der Druckschrift EP 0 718 495 A1 ist eine Windenergieanlage mit einer Blitzstromableitung bekannt geworden, bei der in den Rotorblättern angeordnete Blitzableiter galvanisch von einem im Turm der Windenergieanlage angeordneten Blitzableiter getrennt sind. Unter der Strombeanspruchung eines in ein Rotorblatt einschlagenden Blitzes wird eine niederohmige Verbindung zwischen dem Blitzableiter eines Rotorblatts und dem Blitzableiter des Turms ausgebildet, beispielsweise über eine Funkenstrecke.

Ebenfalls bekannt sind Windenergieanlagen mit einem in einem Rotorblatt angeordneten elektrischen Verbraucher. Die Druckschrift DE 10 2009 020 503 A1 beschreibt beispielsweise ein Rotorblatt, in dem ein Sensor angeordnet ist. Im Rotor einer Windenergieanlage angeordnete elektrische Verbraucher werden üblicherweise über eine Schleifringverbindung mit elektrischer Energie aus dem Maschinenhaus oder dem Turm der Windenergieanlage versorgt. Die genannte Druckschrift schlägt statt eines verschleißanfälligen Schleifrings eine kontaktlose Energieübertragung von einem in der Nabe der Windenergieanlage angeordneten Primärleitersystem auf eine im Rotor angeordnete, induktiv angekoppelte Sekundärspule vor. Durch diese kontaktlose Energieübertragung wird eine galvanische Trennung erreicht.

Aus der Druckschrift DE 102 44 022 B4 ist ein Rotorblatt für eine Windenergieanlage bekannt, auf dessen Saugseite mittels einer netzartigen Leiterstruktur ein elektrostatisches Feld ausgebildet ist, um den CW-Wert sowie den Schallleistungspegel des Rotorblatts zu verbessern. Beim Herannahen eines Gewitters wird das elektrostatische Feld durch die galvanische Trennung von Rotorblatt und Spannungsquelle abgeschaltet.

Aus der Druckschrift DE 197 48 716 C1 ist eine Windenergieanlage mit den Merkmalen der Oberbegriffe der unabhängigen Ansprüche bekannt geworden.

Davon ausgehend ist es die Aufgabe der Erfindung, eine Windenergieanlage mit einem Rotor, der mindestens ein Rotorblatt mit einem Blitzableiter und einen elektrischen Verbraucher aufweist, der in dem Rotorblatt angeordnet ist, zur Verfügung zu stellen, die eine einfache und zuverlässige Versorgung des Verbrauchers ermöglicht und die Gefahr einer Beschädigung der Windenergieanlage, insbesondere des Verbrauchers und der damit über eine Versorgungsleitung verbundenen Elemente, im Falle eines Blitzeinschlags in das Rotorblatt reduziert, sowie ein entsprechendes Verfahren zum Betreiben einer solchen Windenergieanlage. Diese Aufgabe wird gelöst durch die Windenergieanlage mit den Merkmalen des Anspruchs 1. Vorteilhafte Ausgestaltungen sind in den sich anschließenden Unteransprüchen angegeben.

Die Windenergieanlage hat
- einen Rotor, der mindestens ein Rotorblatt und einen Blitzableiter aufweist,
- einen elektrischen Verbraucher, der in dem Rotorblatt angeordnet ist,
- eine elektrische Energiequelle,
- eine elektrische Versorgungsleitung zur Versorgung des Verbrauchers mit elektrischer Energie aus der Energiequelle,
- eine Schalteinrichtung, die dazu ausgebildet ist, eine elektrische Verbindung zwischen dem Verbraucher und der Energiequelle über die Versorgungsleitung herzustellen und zu unterbrechen, und
- eine Steuerung, die dazu ausgebildet ist, die Schalteinrichtung in Abhängigkeit von einer Drehstellung des Rotors so anzusteuern, dass die elektrische Verbindung unterbrochen ist, wenn sich das mindestens eine Rotorblatt in einer blitzschlaggefährdeten Stellung befindet und hergestellt ist, wenn sich das mindestens eine Rotorblatt in einer nicht blitzschlaggefährdeten Stellung befindet.

Die Erfindung beruht auf der Erkenntnis, dass von einer elektrischen Versorgungsleitung, die zu dem Verbraucher in dem Rotorblatt führt, eine zusätzliche Gefährdung ausgeht, weil im Falle eines Blitzeinschlags hohe Spannungen in die Versorgungsleitung induziert werden können, selbst wenn der elektrische Strom des Blitzes über einen Blitzableiter abgeführt wird. Durch diese induzierten Spannungen kann es zu einer Beschädigung des elektrischen Verbrauchers oder sonstiger mit der Versorgungsleitung verbundener Elemente kommen. Dies stellt ein besonderes Problem dar, weil die Reparatur eines in dem Rotorblatt angeordneten Elements besonders zeit- und kostenaufwendig ist und in jedem Fall eine Unterbrechung des Produktionsbetriebs der Windenergieanlage erfordert.

Der Rotor der Windenergieanlage weist mindestens ein Rotorblatt mit einem Blitzableiter auf. Der Rotor kann mehrere, insbesondere drei Rotorblätter umfassen, die jeweils einen Blitzableiter aufweisen. Der Blitzableiter kann ein Blitzschutzkabel oder ein sonstiger Leiter sein, der den Strom eines Blitzes ableiten kann, beispielsweise ein gesonderter, im Inneren des Rotorblatts angeordneter Leiter oder ein Holm aus elektrisch leitfähigem Material oder ein sonstiges leitfähiges Bauteil des Rotorblatts. Der Blitzableiter erstreckt sich von einer Blattspitze des Rotorblatts, an der ein Rezeptor angeordnet sein kann, bis zur Blattwurzel und ist dort elektrisch leitend mit weiteren Elementen einer Blitzschutzeinrichtung der Windenergieanlage verbunden, die üblicherweise im Bereich des Fundaments der Windenergieanlage geerdet sind. Der Rezeptor kann von einer metallischen Blattspitze gebildet sein.

Der elektrische Verbraucher ist in dem Rotorblatt angeordnet, insbesondere in einem Abstand von der Rotornabe. Der Abstand kann relativ klein sein, wenn der Verbraucher im Bereich der Blattwurzel angeordnet ist. Er kann jedoch auch mehrere Meter betragen, bis hin zu einem nahe der Blattspitze angeordneten Verbraucher, der einen im Wesentlichen der Länge des Rotorblatts entsprechenden Abstand von der Rotornabe aufweist.

Die elektrische Energiequelle ist innerhalb oder außerhalb des Rotorblatts angeordnet und dient zur Versorgung des Verbrauchers mit elektrischer Energie. Sie kann im Rotorblatt im Bereich der Blattwurzel, insbesondere in einem Abstand von 3 m oder weniger oder 2 m oder weniger vom blattwurzelseitigen Ende des Rotorblatts, oder in der Rotornabe angeordnet sein, aber auch in einem Maschinenhaus oder einem Turm der Windenergieanlage. Die elektrische Energiequelle kann einen Energiespeicher, beispielsweise eine Batterie, aufweisen. Es kann sich auch um ein Netzteil oder eine Verbindung zu einem Energieversorgungsnetz handeln, insbesondere einem internen Versorgungsnetz der Windenergieanlage.

Die elektrische Versorgungsleitung zur Versorgung des Verbrauchers mit elektrischer Energie aus der Energiequelle stellt eine elektrische Verbindung über mindestens einen Leiter her. Insbesondere kann es sich um eine zweipolige Leitung mit einem Hin- und einem Rückleiter handeln.

Die Schalteinrichtung ist dazu ausgebildet, eine elektrische Verbindung zwischen dem Verbraucher und der Energiequelle über die Versorgungsleitung herzustellen und zu unterbrechen. Dass die elektrische Verbindung unterbrochen wird, bedeutet, dass die von der elektrischen Verbindung verbundenen Elemente hochohmig voneinander getrennt werden. Dass die elektrische Verbindung hergestellt ist, bedeutet, dass eine niederohmige Verbindung besteht und eine Versorgung des Verbrauchers mit elektrischer Energie über die elektrische Verbindung möglich ist. Grundsätzlich kann die elektrische Verbindung an einem beliebigen Punkt zwischen Energiequelle und Verbraucher unterbrochen werden. Dies kann beispielsweise an einem der beiden Enden der Versorgungsleitung oder auch entfernt davon, etwa in einem mittleren Bereich der Versorgungsleitung, geschehen. In jedem Fall wird durch die Schalteinrichtung eine Unterbrechung der elektrischen Verbindung bewirkt und damit eine geschlossene Leiterschleife, die für hohe induzierte Spannungen besonders anfällig ist, unterbrochen.

Weiterhin ist bei der Erfindung eine Steuerung vorhanden, die dazu ausgebildet ist, die Schalteinrichtung in Abhängigkeit von einer Drehstellung des Rotors anzusteuern. Dabei wird die elektrische Verbindung gezielt unterbrochen bzw. hergestellt, je nachdem, ob sich das Rotorblatt zu einem bestimmten Zeitpunkt gerade in einer blitzschlaggefährdeten Stellung oder in einer nicht blitzschlaggefährdeten Stellung befindet. Bei Windenergieanlagen mit im Wesentlichen horizontal angeordneter Rotorachse beeinflusst die Drehstellung des Rotors die Höhe eines Rotorblatts und insbesondere die Höhe der Blattspitze des Rotorblatts, die für einen Blitzeinschlag besonders anfällig ist. Eine blitzschlaggefährdete Stellung liegt vor, wenn das Rotorblatt sich in einer relativ hohen Drehstellung befindet. Eine nicht blitzschlaggefährdete Stellung liegt vor, wenn sich das Rotorblatt in einer relativ niedrigen Drehstellung befindet.

Bei der Erfindung erfolgt die Versorgung des Verbrauchers über eine elektrisch leitfähige Versorgungsleitung und damit im Vergleich zu anderen Energieübertragungstechniken, die ohne eine elektrisch leitfähige Verbindung auskommen - etwa auf Grundlage einer Übertragung von Lichtenergie oder elektromagnetischer Strahlung - auf besonders einfache Art und Weise. Durch die Schalteinrichtung und deren besondere Ansteuerung wird die grundsätzlich von der Versorgungsleitung ausgehende Gefahr induzierter Spannungen auf einfache Weise ausgeräumt. Die Windenergieanlage und insbesondere der Verbraucher im Rotorblatt sind daher auf einfache Weise zuverlässig versorgt und vor Schäden im Falle eines Blitzeinschlags in das Rotorblatt geschützt.

In einer Ausgestaltung ist in der Nähe des Verbrauchers ein elektrischer Energiespeicher angeordnet. Der Energiespeicher befindet sich ebenfalls innerhalb des Rotorblatts und so nahe bei dem Verbraucher, dass eine elektrisch leitfähige Verbindung zwischen Energiespeicher und Verbraucher so kurz bemessen ist, dass selbst im Falle eines Blitzeinschlags eine Beschädigung des Verbrauchers oder des Energiespeichers durch Induktion von Spannungen in die Verbindung ausgeschlossen werden kann. Der elektrische Energiespeicher kann beispielsweise ein Kondensator, insbesondere ein Kondensator mit hoher Kapazität wie beispielsweise ein Doppelschichtkondensator oder auch eine insbesondere wiederaufladbare Batterie sein. Durch die Anordnung eines Energiespeichers in der Nähe des elektrischen Verbrauchers kann die Versorgung des Verbrauchers auch dann sichergestellt werden, wenn die elektrische Verbindung gerade unterbrochen ist. Es wird daher mit einfachen Mittel eine kontinuierliche Energieversorgung des Verbrauchers sichergestellt.

In einer Ausgestaltung ist die Kapazität des Energiespeichers so bemessen, dass ein Energiebedarf des Verbrauchers über einen Zeitraum von einer Stunde oder mehr von dem Energiespeicher zur Verfügung gestellt werden kann. Grundsätzlich kann es für eine kontinuierliche Versorgung des Verbrauchers ausreichend sein, die Kapazität des Energiespeichers so zu bemessen, dass ein sich im normalen Produktionsbetrieb aus der Drehzahl des Rotors ergebender Zeitraum, innerhalb dessen sich das mindestens eine Rotorblatt in einer blitzschlaggefährdeten Stellung befindet, überbrückt werden kann. Dieser Zeitraum beträgt unter normalen Bedingungen deutlich weniger als eine Minute. Bei der genannten Ausgestaltung ist darüber hinaus eine kontinuierliche Energieversorgung des Verbrauchers auch dann möglich, wenn der Rotor trudelt oder stillsteht. Je nach Dimensionierung des Energiespeichers und je nach Energiebedarf des Verbrauchers können auch wesentlich längere Stillstandszeiten auf diese Weise überbrückt werden, beispielsweise mehrere Tage oder Wochen.

In einer Ausgestaltung weist die Schalteinrichtung einen elektromechanischen Schalter auf. Grundsätzlich kann die angestrebte Unterbrechung der elektrischen Verbindung auch unabhängig von einer galvanischen Trennung erreicht werden, beispielsweise unter Verwendung von Halbleiterschaltem. Ein elektromechanischer Schalter stellt jedoch eine galvanische Trennung und damit zugleich eine besonders hochohmige Trennung sicher und ist außerdem besonders robust. Beispielsweise kann ein herkömmliches Relais verwendet werden.

In einer Ausgestaltung ist die elektrische Verbindung zweipolig und die Schalteinrichtung dazu ausgebildet, beide Pole zu schalten. Die Schalteinrichtung weist also einen zweipoligen Schalter auf. Dadurch wird die Anfälligkeit der elektrischen Verbindung für durch einen Blitzeinschlag induzierte Spannungen weiter verringert. Bei den beiden Polen der elektrischen Verbindung kann es sich im Falle einer Gleichspannungsversorgung um einen Plus- und einen Minuspol handeln. Die elektrische Verbindung kann jedoch auch eine Wechselspannungsverbindung mit zwei unterschiedlichen Phasen oder einer Phase und einem Nullleiter sein.

In einer Ausgestaltung weist die Versorgungsleitung zwei Leiter auf und die Schalteinrichtung ist so ausgebildet, dass die beiden Leiter bei unterbrochener Verbindung hochohmig voneinander getrennt sind. Grundsätzlich kann die Unterbrechung der elektrischen Verbindung auch in einem Trennen der Versorgungsleitung von dem Verbraucher oder der Energiequelle bestehen, wobei beispielsweise zwei Leiter der Versorgungsleitung kurzgeschlossen werden können. Eine hochohmige Trennung auch zwischen den beiden Leitern, insbesondere eine galvanische Trennung, ist jedoch besonders zweckmäßig.

In einer Ausgestaltung weist die Schalteinrichtung einen ersten Schalter auf, der zwischen der Versorgungsleitung und dem elektrischen Verbraucher angeordnet ist.

In einer Ausgestaltung weist die Schalteinrichtung einen zweiten Schalter auf, der zwischen der Versorgungsleitung und der Energiequelle angeordnet ist. Insbesondere können die beiden genannten Ausgestaltungen kombiniert werden, so dass die Schalteinrichtung einen ersten und einen zweiten Schalter aufweist und die Versorgungsleitung an beiden Enden, d.h. sowohl von der Energiequelle als auch vom Verbraucher, getrennt wird. Dadurch können in die Versorgungsleitung induzierte Spannungen weder die Energiequelle noch den Verbraucher beschädigen.

In einer Ausgestaltung weist der elektrische Verbraucher einen Sensor auf. Der Sensor kann beispielsweise eine Beschleunigung oder Umgebungsbedingungen wie Temperatur, Luftdruck, Windgeschwindigkeit usw. erfassen. In Verbindung mit der Erfindung können diese für den optimalen Betrieb der Windenergieanlage wichtigen Größen besonders einfach und zuverlässig kontinuierlich erfasst werden.

In einer Ausgestaltung ist der elektrische Verbraucher zur Übermittlung von Daten über eine nicht elektrisch leitfähige Verbindung mit einer Datenverarbeitungseinrichtung verbunden, die außerhalb des mindestens einen Rotorblatts angeordnet ist. Beispielsweise kann die Datenverarbeitungseinrichtung in der Rotornabe angeordnet sein und Daten von einem Sensor im Rotorblatt aufbereiten. Durch die nicht elektrisch leitfähige Verbindung ist dies kontinuierlich möglich, ohne dass hierfür ein potentiell durch einen Blitzeinschlag gefährdeter oder zu Beschädigungen anderer Elemente führender elektrischer Leiter benötigt wird. Die nicht elektrisch leitfähige Verbindung braucht dabei in keiner Drehstellung des Rotors unterbrochen zu werden, so dass eine kontinuierliche Datenerfassung möglich ist. Bei der nicht elektrisch leitfähigen Verbindung kann es sich beispielsweise um eine Funkstrecke oder einen Lichtwellenleiter handeln.

In einer Ausgestaltung wird eine blitzschlaggefährdete Stellung des mindestens einen Rotorblatts angenommen, wenn eine Längsachse des mindestens einen Rotorblatts in einem Winkel von 30° oder mehr gegenüber einer Horizontalen nach oben weist. Diese Definition einer blitzschlaggefährdeten Stellung beschreibt bei einer Windenergieanlage mit einem Rotor mit drei Rotorblättern stets denjenigen Winkelbereich, in dem sich das in der höchsten Drehstellung befindliche Rotorblatt befindet. In der Regel ist nur dieses von einem Blitzeinschlag betroffen. Durch die genannte Definition des blitzschlaggefährdeten Bereichs wird eine möglichst kurze Unterbrechung der elektrischen Verbindung erzielt. In dem komplementären Winkelbereich, d.h. immer dann, wenn das mindestens eine Rotorblatt sich unterhalb einer um 30° gegenüber der Horizontalen nach oben weisenden Richtung befindet, kann die elektrische Verbindung hergestellt sein.

In einer Ausgestaltung ist eine nicht elektrisch leitfähige Verbindung vorhanden, über die die Schalteinrichtung ansteuerbar ist. Die Steuerung, die die Schalteinrichtung ansteuert, kann grundsätzlich an einem beliebigen Ort, auch in der Nähe des Verbrauchers, angeordnet sein. In diesem Fall sind keine besonderen Vorsichtsmaßnahmen hinsichtlich der für die Ansteuerung der Schalteinrichtung verwendeten Verbindung erforderlich. Häufig ist jedoch eine Anordnung der Steuerung in einem Abstand von dem elektrischen Verbraucher zweckmäßig, insbesondere in der Rotornabe. Dies ermöglicht unter anderem, eine einzige Steuerung für mehrere Rotorblätter einzusetzen und hierfür die aktuelle Drehstellung des Rotors nur einmal zu erfassen. In diesem Fall wird keine elektrisch leitfähige Verbindung zwischen der Steuerung und der Schalteinrichtung, von der die genannten Gefahren ausgehen können, benötigt.

In einer Ausgestaltung sind zwei Leiter der Versorgungsleitung verdrillt und/oder in einem maximalen Abstand von dem Blitzableiter angeordnet und/oder weisen eine Abschirmung auf. Diese Maßnahmen wirken einer Induktion von Spannungen in die Versorgungsleitung entgegen.

In einer Ausgestaltung ist in der Nähe des elektrischen Verbrauchers eine Überspannungsschutzeinrichtung zum Schutz des Verbrauchers und/oder des Energiespeichers vor elektrischer Überspannung vorhanden. Dadurch werden die trotz der Erfindung verbleibenden Überspannungen aufgrund eines Blitzeinschlags unschädlich gemacht.

In einer Ausgestaltung sind mehrere Rotorblätter mit jeweils einem elektrischen Verbraucher vorhanden, denen jeweils eine elektrische Versorgungsleitung und eine Schalteinrichtung zugeordnet sind. Jede Schalteinrichtung kann eine gesonderte Steuerung aufweisen. Bevorzugt wird eine gemeinsame Steuerung verwendet, die alle vorhandenen Schalteinrichtungen ansteuert.

Die oben genannte Aufgabe wird ebenfalls gelöst durch das Verfahren zum Betreiben einer Windenergieanlage mit den Merkmalen des Anspruchs 16. Das Verfahren betrifft eine Windenergieanlage, die einen Rotor, der mindestens ein Rotorblatt mit einem Blitzableiter, einen elektrischen Verbraucher, der in dem Rotorblatt angeordnet ist, und eine elektrische Energiequelle aufweist, und umfasst die folgenden Schritte:
- Versorgen des elektrischen Verbrauchers mit elektrischer Energie aus der elektrischen Energiequelle über eine elektrische Verbindung,
- Erfassen einer Drehstellung des Rotors,
- Unterbrechen der elektrischen Verbindung, wenn das mindestens eine Rotorblatt in eine blitzschlaggefährdete Stellung gelangt,
- Herstellen der elektrischen Verbindung, wenn das mindestens eine Rotorblatt in eine nicht blitzschlaggefährdete Stellung gelangt.

Damit, dass das Rotorblatt in eine blitzschlaggefährdete bzw. in eine nichtblitzschlaggefährdete Stellung gelangt ist gemeint, dass es sich bei der Drehbewegung des Rotors in eine bestimmte Drehstellung begibt, in der ein Blitzschlag relativ wahrscheinlich bzw. relativ unwahrscheinlich ist. Auf Grundlage der erfassten Drehstellung des Rotors wird entsprechend der vorliegenden Blitzschlaggefährdung die elektrische Verbindung entweder unterbrochen oder hergestellt. Wie vorstehend bereits in Verbindung mit der erfindungsgemäßen Windenergieanlage im Einzelnen erläutert, hängt die Blitzschlaggefährdung eines Rotorblatts von der aktuellen Drehstellung ab und ist in der Regel in einem bestimmten, relativ weit oben angeordneten Winkelbereich relativ hoch und im komplementären, relativ weit unten angeordneten Winkelbereich relativ gering. Das Unterbrechen der elektrischen Verbindung kann bei der Erfindung zu einem Zeitpunkt erfolgen, zu dem das jeweilige Rotorblatt den nicht blitzschlaggefährdeten Bereich verlässt und in den blitzschlaggefährdeten Bereich eintritt. Entsprechend kann das Herstellen der elektrischen Verbindung in dem Zeitpunkt erfolgen, zu dem das betreffende Rotorblatt vom blitzschlaggefährdeten Bereich in den nicht blitzschlaggefährdeten Bereich eintritt. Innerhalb der beiden genannten Bereiche kann die elektrische Verbindung dauerhaft unterbrochen bzw. hergestellt bleiben.

Zu weiteren Einzelheiten der Merkmale des Verfahrens wird auf die oben stehenden Erläuterungen der erfindungsgemäßen Windenergieanlage verwiesen, die entsprechend gelten. Insbesondere kann das Verfahren entsprechend den vorstehend erläuterten Merkmalen der Windenergieanlage ausgestaltet sein. Beispielsweise kann für das Unterbrechen und Herstellen der elektrischen Verbindung eine Schalteinrichtung verwendet werden. Beispielsweise kann eine Steuerung verwendet werden, die die Schalteinrichtung in Abhängigkeit von einer Drehstellung des Rotors ansteuert. Zum Erfassen der Drehstellung des Rotors kann ein Winkelsensor verwendet werden, der in der Rotornabe oder in dem mindestens einen Rotorblatt angeordnet ist. Die Windenergieanlage kann beispielsweise zwei oder mehr Rotorblätter aufweisen, wobei die vorstehend erläuterten Verfahrensschritte für jedes Rotorblatt, in dem ein elektrischer Verbraucher angeordnet ist, ausgeführt werden.

Die Erfindung wird nachfolgend anhand eines in zwei Figuren dargestellten Ausführungsbeispiels näher erläutert. Es zeigen:
- Fig. 1: einen Ausschnitt einer Windenergieanlage in einer schematischen Darstellung,
- Fig. 2: eine schematische Darstellung der in Rotornabe und Rotorblatt angeordneten Elemente der Erfindung.

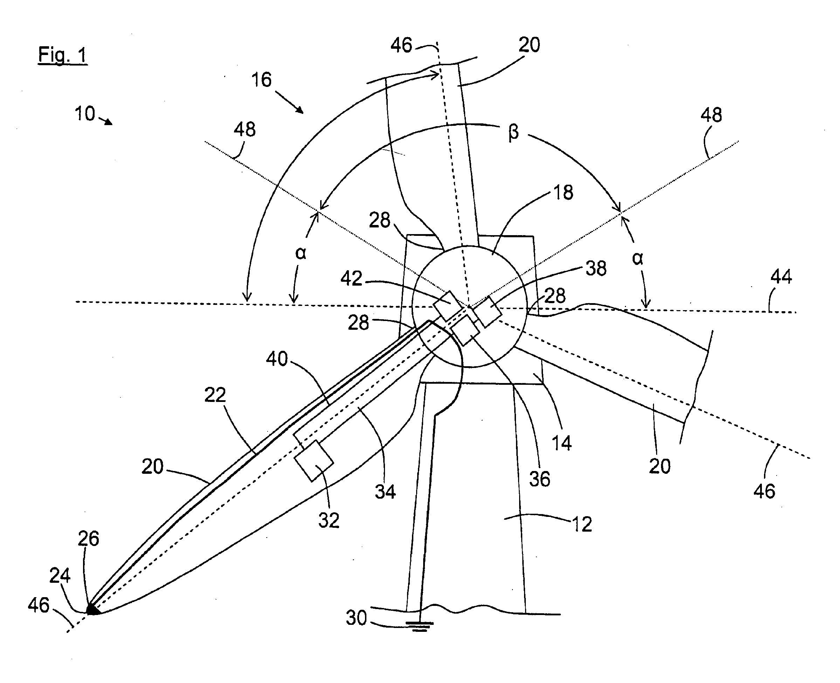

Die in der Fig. 1 gezeigte Windenergieanlage 10 weist einen Turm 12, ein drehbar auf dem Turm 12 gelagertes Maschinenhaus 14 und einen Rotor 16 auf. Der Rotor 16 rotiert um eine im Wesentlichen horizontale Achse und umfasst eine Rotornabe 18 und drei Rotorblätter 20.

Weitere Einzelheiten sind bei allen drei Rotorblättern 20 vorhanden, in der Fig. 1 jedoch nur für das unten links angeordnete Rotorblatt 20 eingezeichnet. Anhand dieses Rotorblatts 20 werden sie im Folgenden erläutert. Das Rotorblatt 20 weist einen Blitzableiter 22 auf, der sich von der Blattspitze 24 des Rotorblatts 20, an der ein Rezeptor 26 in Form einer metallischen Platte angeordnet ist, bis zur Blattwurzel 28 des Rotorblatts 20 erstreckt. Dort ist der Blitzableiter 22 mit weiteren Elementen einer Blitzschutzeinrichtung verbunden, die am Fundament des Turms 12 eine Erdung 30 aufweisen.

Im Rotorblatt 20 ist in einem Abstand von der Rotornabe 18 ein elektrischer Verbraucher 32 angeordnet. Dieser Verbraucher 32 ist über eine elektrische Versorgungsleitung 34 und einen zweiten Schalter 36 mit einer Energiequelle 38 in Form eines Netzteils verbunden. Der zweite Schalter 36 und die Energiequelle 38 sind im dargestellten Ausführungsbeispiel in der Rotornabe 18 angeordnet. Außerdem ist der Verbraucher 32 über eine nicht elektrisch leitfähige Verbindung 40 in Form eines Lichtwellenleiters mit einer Datenverarbeitungseinrichtung 42 verbunden, die sich ebenfalls in der Rotornabe 18 befindet.

Ebenfalls in der Figur 1 veranschaulicht ist eine blitzschlaggefährdete Stellung eines der Rotorblätter 20. Hierzu ist eine Horizontale 44 als gestrichelte Linie eingezeichnet und als weitere gestrichelte Linien die Längsachsen 46 der Rotorblätter 20. Der besonders blitzschlaggefährdete Bereich erstreckt sich zwischen den beiden gepunkteten Linien 48, die ausgehend von der in der Mitte der Rotornabe 18 befindlichen Rotorachse, jeweils in einem Winkel von α = 30° gegenüber der Horizontalen 44 nach oben weisen.

Der zwischen diesen beiden gepunkteten Linien 48 liegende Winkelbereich von β = 120° kennzeichnet einen besonders blitzschlaggefährdeten Bereich. Wenn sich die Längsachse 46 eines Rotorblatts 20 in diesem Winkelbereich β befindet, ist die Wahrscheinlichkeit eines Blitzeinschlags besonders groß. In zu dem Winkelbereich β komplementär ausgebildeten unteren Winkelbereich, der insgesamt einen Winkel von 240° überstreicht, ist die Gefahr eines Blitzeinschlags wesentlich geringer. Dieser Bereich wird daher als nicht blitzschlaggefährdeter Bereich bezeichnet.

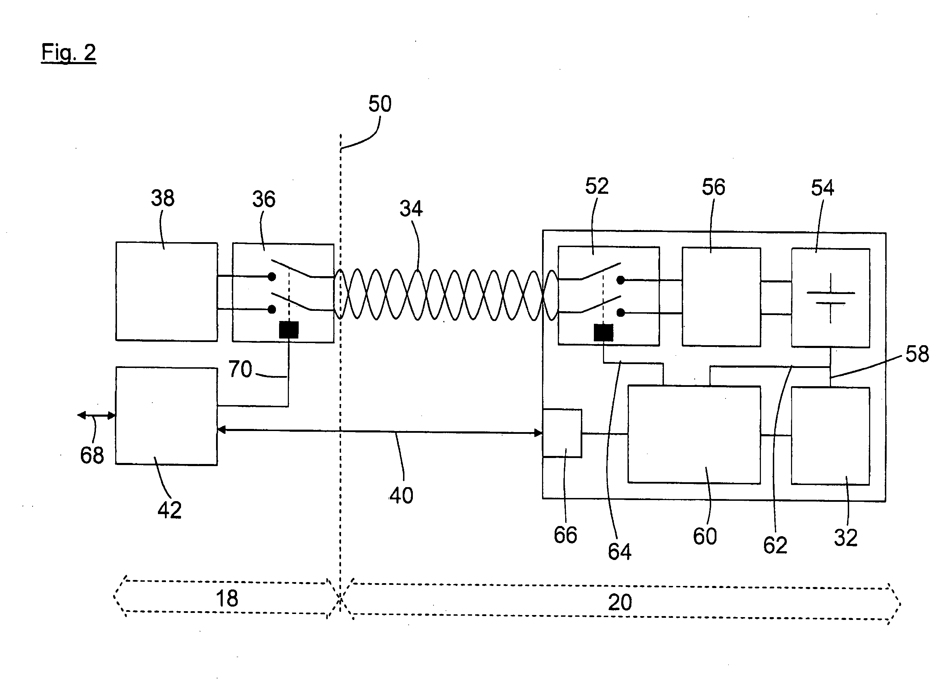

Die elektrische Verbindung zwischen dem Verbraucher 32 bzw. einem zugeordneten Energiespeicher 54 (siehe Fig. 2) und der Energiequelle 38 ist bei dem sich in der Figur 1 im Winkelbereich β befindlichen Rotorblatt 20 unterbrochen. Die Energieversorgung des Verbrauchers 32 wird über einen Energiespeicher 54 (siehe Fig. 2) sichergestellt. Die Verbraucher 32 bzw. die zugeordneten Energiespeicher 54 der Rotorblätter 20, welche sich außerhalb des Winkelbereichs β befinden, werden mit Energie aus der Energiequelle 38 versorgt.

Fig. 2 zeigt weitere Einzelheiten in einer ebenfalls schematischen Darstellung. Die gestrichelte Trennlinie 50 veranschaulicht eine Trennung zwischen Rotornabe 18 und Rotorblatt 20. Links der Trennlinie 50 sind die in der Rotornabe 18 angeordneten Elemente eingezeichnet, rechts davon die innerhalb des Rotorblatts 20 angeordneten Elemente.

In der Rotornabe 18 befindet sich die Energiequelle 38 in Form eines Netzteils sowie der zweite Schalter 36. Bei dem zweiten Schalter 36 handelt es sich um ein zweipoliges Relais. Die beiden in der Fig. 2 links angeordneten Kontakte des zweiten Schalters 36 sind mit den beiden Polen der Energiequelle 38 verbunden. Der Schalter 36 kann in seiner geschlossenen Stellung diese beiden Kontakte mit den beiden Polen der Versorgungsleitung 34 verbinden bzw. diese Verbindung unterbrechen.

Die Versorgungsleitung 34 verläuft ausgehend vom zweiten Schalter 36 weiter im Inneren des Rotorblatts 20 bis zu einem ersten Schalter 52, der ebenfalls ein zweipoliges Relais ist. Der erste Schalter 52 trennt die beiden Pole der Versorgungsleitung 34 von einem Energiespeicher 54. An die beiden Leitungen, die den ersten Schalter 52 mit dem Energiespeicher 54 verbinden, ist außerdem eine Überspannungsschutzeinrichtung 56 angeschlossen. Die beiden Leiter der zweipoligen Versorgungsleitung 34 sind verdrillt.

Der in dem Rotorblatt 20 angeordnete elektrische Verbraucher 32 ist ein Sensor, der über eine in der Fig. 2 als einzelner Strich angedeutete Versorgungsleitung 58 mit dem Energiespeicher 54 verbunden ist und von diesem mit elektrischer Energie versorgt wird.

Weiterhin zeigt Fig. 2 eine Steuerung 60, die über eine Leitung 62 ebenfalls mit dem Energiespeicher 54 verbunden ist und von diesem mit elektrischer Energie versorgt wird. Die Steuerung 60 ist außerdem über eine weitere Leitung 64 mit dem ersten Schalter 52 verbunden und steuert diesen in Abhängigkeit von der Drehstellung des Rotors 16 an. Zusätzlich ist die Steuerung 60 mit dem Verbraucher 32 verbunden und führt eine Signalaufbereitung der Signale des darin enthaltenen Sensors aus. Diese Daten werden über eine Signalschnittstelle 66 und die nicht elektrisch leitfähige Verbindung 40 zu einer Datenverarbeitungseinrichtung 42 übertragen. Wie durch den Doppelpfeil 68 angedeutet, ist die Datenverarbeitungseinrichtung 42 für einen weiteren Datenaustausch vorgesehen, insbesondere mit einer nicht dargestellten Betriebsführung der Windenergieanlage, die die von der Datenverarbeitungseinrichtung 42 verarbeiteten Daten des im elektrischen Verbraucher 32 enthaltenen Sensors nutzen kann.

Der zweite Schalter 36 wird in gleicher Weise angesteuert wie der erste Schalter 52 und zwar über eine Verbindung 70 zur Datenverarbeitungseinrichtung 42. Auf diese Weise können die beiden Schalter 36, 52 bevorzugt zeitgleich angesteuert werden.

In der Fig. 2 ebenfalls nicht dargestellt ist, wie die Steuerung 60 die benötigte Information über die aktuelle Drehstellung des Rotors 16 erhält. Diese Information kann grundsätzlich innerhalb des Rotorblatts 20 gewonnen werden, beispielsweise mit einem hierfür geeigneten Sensor, der gegebenenfalls in die Steuerung 60 integriert sein kann. Ebenfalls möglich ist eine Übertragung dieser Information oder einer daraus abgeleiteten Ein/Aus-Information (entsprechend den beiden Schalterstellungen "geöffnet" und "geschlossen") über die nicht elektrisch leitfähige Verbindung 40. Dann kann die Information durch einen beispielsweise innerhalb der Nabe 18 des Rotors 16 angeordneten Sensor gewonnen, von der Datenverarbeitungseinrichtung 42 weiterverarbeitet, über die Verbindung 40 zur Steuerung 60 übertragen und für die Ansteuerung der Schalteinrichtung 52 verwendet werden. Auf diese Weise kann ein zentral angeordneter Sensor, gegebenenfalls in Kombination mit einer zentral angeordneten Datenverarbeitungseinrichtung 42, zur Ansteuerung mehrerer Schalteinrichtungen, die den einzelnen Rotorblättern 20 zugeordnet sind, herangezogen werden. Alternativ kann die Winkelinformation sowohl von einem zentral angeordneten Sensor, insbesondere in der Nabe 18, als auch von in den Rotorblättern 20 angeordneten Sensoren bereitgestellt werden. Dann können die Daten des zentral angeordneten Sensors von der Datenverarbeitungseinrichtung 42 ausgewertet und zur Ansteuerung der zweiten Schalter herangezogen werden. Die Daten der in den Rotorblättern 20 angeordneten Sensoren können von den Steuerungen 60 ausgewertet und zur Ansteuerung der ersten Schalter 52 herangezogen werden.

### Liste der verwendeten Bezugszeichen:

- 10: Windenergieanlage
- 12: Turm
- 14: Maschinenhaus
- 16: Rotor
- 18: Rotornabe
- 20: Rotorblatt
- 22: Blitzableiter
- 24: Blattspitze
- 26: Rezeptor
- 28: Blattwurzel
- 30: Erdung
- 32: Verbraucher
- 34: Versorgungsleitung
- 36: zweiter Schalter
- 38: Energiequelle
- 40: nicht elektrisch leitfähige Verbindung
- 42: Datenverarbeitungseinrichtung
- 44: Horizontale
- 46: Längsachse
- 48: gepunktete Linie
- 50: Trennlinie
- 52: erster Schalter
- 54: Energiespeicher
- 56: Überspannungsschutzeinrichtung
- 58: Leitung
- 60: Steuerung
- 62: Leitung
- 64: weitere Leitung
- 66: Signalschnittstelle
- 68: Doppelpfeil

## Patentansprüche

1. Windenergieanlage (10) mit
• einem Rotor (16), der mindestens ein Rotorblatt (20) mit einem Blitzableiter (22) aufweist,
• einem elektrischen Verbraucher (32), der in dem Rotorblatt (20) angeordnet ist,
• einer elektrischen Energiequelle (38),
• einer elektrischen Versorgungsleitung (34) zur Versorgung des Verbrauchers (32) mit elektrischer Energie aus der Energiequelle (38), gekennzeichnet durch
• eine Schalteinrichtung, die dazu ausgebildet ist, eine elektrische Verbindung zwischen dem Verbraucher (32) und der Energiequelle (38) über die Versorgungsleitung (34) herzustellen und zu unterbrechen, und
• eine Steuerung (60), die dazu ausgebildet ist, die Schalteinrichtung in Abhängigkeit von einer Drehstellung des Rotors (16) so anzusteuern, dass die elektrische Verbindung unterbrochen ist, wenn sich das mindestens eine Rotorblatt (20) in einer blitzschlaggefährdeten Stellung befindet und hergestellt ist, wenn sich das mindestens eine Rotorblatt (20) in einer nicht blitzschlaggefährdeten Stellung befindet.

2. Windenergieanlage (10) nach Anspruch 1, **dadurch gekennzeichnet, dass** in der Nähe des Verbrauchers (32) ein elektrischer Energiespeicher (54) angeordnet ist.

3. Windenergieanlage (10) nach Anspruch 2, **dadurch gekennzeichnet, dass** die Kapazität des Energiespeichers (54) so bemessen ist, dass ein Energiebedarf des Verbrauchers (32) über einen Zeitraum von einer Stunde oder mehr von dem Energiespeicher (54) zur Verfügung gestellt wird.

4. Windenergieanlage (10) nach einem der Ansprüche 1 bis 3, **dadurch gekennzeichnet, dass** die Schalteinrichtung einen elektromechanischen Schalter aufweist.

5. Windenergieanlage (10) nach einem der Ansprüche 1 bis 4, **dadurch gekennzeichnet, dass** die elektrische Verbindung zweipolig und die Schalteinrichtung dazu ausgebildet ist, beide Pole zu schalten.

6. Windenergieanlage (10) nach einem der Ansprüche 1 bis 5, **dadurch gekennzeichnet, dass** die Versorgungsleitung (34) zwei Leiter aufweist und die Schalteinrichtung so ausgebildet ist, dass die beiden Leiter bei unterbrochener Verbindung hochohmig voneinander getrennt sind.

7. Windenergieanlage (10) nach einem der Ansprüche 1 bis 6, **dadurch gekennzeichnet, dass** die Schalteinrichtung einen ersten Schalter (52) aufweist, der zwischen der Versorgungsleitung (34) und dem Verbraucher (32) angeordnet ist.

8. Windenergieanlage (10) nach einem der Ansprüche 1 bis 7, **dadurch gekennzeichnet, dass** die Schalteinrichtung einen zweiten Schalter (36) aufweist, der zwischen der Versorgungsleitung (34) und der Energiequelle (38) angeordnet ist.

9. Windenergieanlage (10) nach einem der Ansprüche 1 bis 8, **dadurch gekennzeichnet, dass** der Verbraucher (32) einen Sensor aufweist.

10. Windenergieanlage (10) nach einem der Ansprüche 1 bis 9, **dadurch gekennzeichnet, dass** der Verbraucher (32) zur Übermittlung von Daten über eine nicht elektrisch leitfähige Verbindung mit einer Datenverarbeitungseinrichtung (42) verbunden ist, die außerhalb des mindestens einen Rotorblatts (20) angeordnet ist.

11. Windenergieanlage (10) nach einem der Ansprüche 1 bis 10, **dadurch gekennzeichnet, dass** eine blitzschlaggefährdete Stellung des mindestens einen Rotorblatts (20) vorliegt, wenn eine Längsachse (46) des mindestens einen Rotorblatts (20) in einem Winkel von 30° oder mehr gegenüber einer Horizontalen (44) nach oben weist.

12. Windenergieanlage (10) nach einem der Ansprüche 1 bis 11, **dadurch gekennzeichnet, dass** eine nicht elektrisch leitfähige Verbindung vorhanden ist, über die die Schalteinrichtung ansteuerbar ist.

13. Windenergieanlage (10) nach einem der Ansprüche 1 bis 12, **dadurch gekennzeichnet, dass** zwei Leiter der Versorgungsleitung (34) verdrillt und/oder in einem maximalen Abstand von dem Blitzableiter (22) angeordnet sind und/oder eine Abschirmung aufweisen.

14. Windenergieanlage (10) nach einem der Ansprüche 1 bis 13, **dadurch gekennzeichnet, dass** in der Nähe des Verbrauchers (32) eine Überspannungsschutzeinrichtung (56) zum Schutz des Verbrauchers (32) und/oder des Energiespeichers (54) vor elektrischer Überspannung vorhanden ist.

15. Windenergieanlage (10) nach einem der Ansprüche 1 bis 14, **dadurch gekennzeichnet, dass** mehrere Rotorblätter (20) mit jeweils einem elektrischen Verbraucher (32) vorhanden sind, denen jeweils eine elektrische Versorgungsleitung (34) und eine Schalteinrichtung zugeordnet ist.

16. Verfahren zum Betreiben einer Windenergieanlage (10), die einen Rotor (16), der mindestens ein Rotorblatt (20) mit einem Blitzableiter (22), einen elektrischen Verbraucher (32), der in dem Rotorblatt (20) angeordnet ist, und eine elektrische Energiequelle (38) aufweist, mit dem Schritt:
• Versorgen des elektrischen Verbrauchers (32) mit elektrischer Energie aus der elektrischen Energiequelle (38) über eine elektrische Verbindung, gekennzeichnet durch die folgenden Schritte:
• Erfassen einer Drehstellung des Rotors (16),
• Unterbrechen der elektrischen Verbindung, wenn das mindestens eine Rotorblatt (20) in eine blitzschlaggefährdete Stellung gelangt,
• Herstellen der elektrischen Verbindung, wenn das mindestens eine Rotorblatt (20) in eine nicht blitzschlaggefährdete Stellung gelangt.

## Claims

1. A wind power plant (10) comprising
• a rotor (16) having at least one rotor blade (20) with a lightning conductor (22),
• an electrical consumer (32) which is arranged in the rotor blade (20),
• an electrical energy source (38),
• an electrical supply line (34) for supplying the consumer (32) with electrical energy from the energy source (38), **characterized by**
• a switching apparatus that is designed to establish and interrupt an electrical connection between the consumer (32) and the energy source (38) by means of the supply line (34), and
• a control (60) that is designed to control the switching apparatus depending on a rotary position of the rotor (16) such that the electrical connection is interrupted when the at least one rotor blade (20) is in a position endangered by lightening, and the electrical connection is established when the least one rotor blade (20) is in a position not endangered by lightening.

2. The wind power plant (10) according to claim 1, **characterized in that** an electrical energy store (54) is arranged in the proximity of the consumer (32).

3. The wind power plant (10) according to claim 2, **characterized in that** the capacity of the energy store (54) is set so that energy required by the consumer (32) is provided by the energy store (54) over a period of an hour or longer.

4. The wind power plant (10) according to one of claims 1 to 3, **characterized in that** the switching apparatus has an electromechanical switch.

5. The wind power plant (10) according to one of claims 1 to 4, **characterized in that** the electrical connection has two poles, and the switching apparatus is designed to switch both poles.

6. The wind power plant (10) according to one of claims 1 to 5, **characterized in that** the supply line (34) has two conductors, and the switching apparatus is designed so that the two conductors are disconnected from each other with high resistance when the connection is interrupted.

7. The wind power plant (10) according to one of claims 1 to 6, **characterized in that** the switching apparatus has a first switch (52) that is arranged between the supply line (34) and the consumer (32).

8. The wind power plant (10) according to one of claims 1 to 7, **characterized in that** the switching apparatus has a second switch (36) that is arranged between the supply line (34) and the energy source (38).

9. The wind power plant (10) according to one of claims 1 to 8, **characterized in that** the consumer (32) has a sensor.

10. The wind power plant (10) according to one of claims 1 to 9, **characterized in that** the consumer (32) is connected to a data processing apparatus (42) for transmitting data via a non-electrically conductive connection, and the data processing apparatus is arranged outside of the at least one rotor blade (20).

11. The wind power plant (10) according to one of claims 1 to 10, **characterized in that** a position of the at least one rotor blade (20) endangered by lightning exists when a longitudinal axis (46) of the at least one rotor blade (20) faces upward at an angle of 30° or more relative to a horizontal (44).

12. The wind power plant (10) according to one of claims 1 to 11, **characterized in that** a non-electrically conductive connection is available by means of which the switching apparatus can be controlled.

13. The wind power plant (10) according to one of claims 1 to 12, **characterized in that** two conductors of the supply line (34) are twisted and/or arranged at a maximum distance from the lightning conductor (22), and/or have a shielding.

14. The wind power plant (10) according to one of claims 1 to 13, **characterized in that** an overvoltage protection apparatus (56) is proximate to the consumer (32) to protect the consumer (32) and/or the energy store (54) from electrical overvoltage.

15. The wind power plant (10) according to one of claims 1 to 14, **characterized in that** a plurality of rotor blades (20) are available each having an electrical consumer (32), and an electrical supply line (34) and a switching apparatus is assigned to each one.

16. A method for operating a wind power plant (10) comprising a rotor (16) having at least one rotor blade (20) with a lightning conductor (22), an electrical consumer (32) that is arranged in the rotor blade (20) and an electrical energy source (38), comprising the step:
• supplying the electrical consumer (32) with electrical energy from the electrical energy source (38) by means of an electrical connection, **characterized by** the following steps:
• detecting a rotary position of the rotor (16),
• interrupting the electrical connection when the at least one rotor blade (20) reaches a position endangered by lightning,
• establishing the electrical connection when the at least one rotor blade (20) reaches a position not endangered by lightning.

## Revendications

1. Éolienne (10) avec
• un rotor (16) présentant au moins une pale de rotor (20) avec un paratonnerre (22),
• un consommateur électrique (32) agencé dans la pale de rotor (20),
• une source d'énergie électrique (38),
• une ligne d'alimentation électrique (34) pour l'alimentation du consommateur (32) en énergie électrique à partir de la source d'énergie (38), **caractérisée par**
• un dispositif de commutation conçu pour établir et interrompre une connexion électrique entre le consommateur (32) et la source d'énergie (38) par le biais de la ligne d'alimentation (34), et
• une commande (60) conçue pour actionner le dispositif de commutation en fonction d'une position de rotation du rotor (16) de manière à interrompre la connexion électrique lorsque l'au moins une pale de rotor (20) se trouve dans une position exposée au risque de foudre, et à l'établir lorsque l'au moins une pale de rotor (20) se trouve dans une position non exposée au risque de foudre.

2. Éolienne (10) selon la revendication 1, **caractérisée en ce qu'**un accumulateur d'énergie électrique (54) est installé à proximité du consommateur (32).

3. Éolienne (10) selon la revendication 2, **caractérisée en ce que** la capacité de l'accumulateur d'énergie (54) est déterminée de manière à ce que l'accumulateur d'énergie (54) couvre un besoin énergétique du consommateur (32) sur une durée d'une heure ou plus.

4. Éolienne (10) selon l'une des revendications 1 à 3, **caractérisée en ce que** le dispositif de commutation comporte un commutateur électromécanique.

5. Éolienne (10) selon l'une des revendications 1 à 4, **caractérisée en ce que** la connexion électrique est bipolaire et le dispositif de commutation est conçu pour commuter les deux pôles.

6. Éolienne (10) selon l'une des revendications 1 à 5, **caractérisée en ce que** la ligne d'alimentation (34) présente deux conducteurs et le dispositif de commutation est conçu de manière à ce que les deux conducteurs soient séparés l'un de l'autre avec une haute résistance lorsque la connexion est interrompue.

7. Éolienne (10) selon l'une des revendications 1 à 6, **caractérisée en ce que** le dispositif de commutation présente un premier commutateur (52) agencé entre la ligne d'alimentation (34) et le consommateur (32).

8. Éolienne (10) selon l'une des revendications 1 à 7, **caractérisée en ce que** le dispositif de commutation présente un deuxième commutateur (36) agencé entre la ligne d'alimentation (34) et la source d'énergie (38).

9. Éolienne (10) selon l'une des revendications 1 à 8, **caractérisée en ce que** le consommateur (32) présente un capteur.

10. Éolienne (10) selon l'une des revendications 1 à 9, **caractérisée en ce que** pour la transmission de données par le biais d'une liaison non conductrice électriquement, le consommateur (32) est relié à un dispositif de traitement de données (42) agencé à l'extérieur de l'au moins une pale de rotor (20).

11. Éolienne (10) selon l'une des revendications 1 à 10, **caractérisée en ce que** l'au moins une pale de rotor (20) présente une position exposée au risque de foudre lorsqu'un axe longitudinal (46) de l'au moins une pale de rotor (20) est dirigé vers le haut sous un angle de 30° ou plus par rapport à une horizontale (44).

12. Éolienne (10) selon l'une des revendications 1 à 11, **caractérisée en ce qu'**il est prévu une liaison non conductrice électriquement permettant d'actionner le dispositif de commutation.

13. Éolienne (10) selon l'une des revendications 1 à 12, **caractérisée en ce que** deux conducteurs de la ligne d'alimentation (34) sont torsadés et/ou sont agencés à une distance maximale du paratonnerre (22) et/ou présentant un blindage.

14. Éolienne (10) selon l'une des revendications 1 à 13, **caractérisée en ce qu'**un dispositif parasurtension (56) est prévu à proximité du consommateur (32), pour protéger le consommateur (32) et/ou l'accumulateur d'énergie (54) contre une surtension électrique.

15. Éolienne (10) selon l'une des revendications 1 à 14, **caractérisée en ce qu'**il est prévu plusieurs pales de rotor (20) respectivement pourvues d'un consommateur électrique (32), auxquelles sont respectivement attribués une ligne d'alimentation électrique (34) et un dispositif de commutation.

16. Procédé pour le fonctionnement d'une éolienne (10) comprenant un rotor (16) présentant au moins une pale de rotor (20) avec un paratonnerre (22), un consommateur électrique (32) agencé dans la pale de rotor (20) et une source d'énergie électrique (38), avec l'étape suivante :
• alimentation du consommateur électrique (32) avec de l'énergie électrique à partir de la source d'énergie électrique (38), par le biais d'une connexion électrique, **caractérisée par** les étapes suivantes :
• détermination d'une position de rotation du rotor (16),
• interruption de la connexion électrique lorsque l'au moins une pale de rotor (20) arrive dans une position exposée au risque de foudre,
• établissement de la connexion électrique lorsque l'au moins une pale de rotor (20) arrive dans une position non exposée au risque de foudre.
